# EUROPÄISCHE PATENTSCHRIFT

(11) **EP 0 849 324 B1**
(45) Veröffentlichungstag und Bekanntmachung des Hinweises auf die Patenterteilung: **02.05.2003**
(21) Anmeldenummer: 97120646.1
(22) Anmeldetag: 25.11.1997
(51) Int. Cl.: C08L 23/10, C08L 77/00, C08L 51/06

(54) **Hochfrequenzverschweissbare Polymermischung**
Radio frequency weldable polymer blend
Mélange polymère soudable par haute fréquence

(30) Priorität: 20.12.1996 DE 19653590
(43) Veröffentlichungstag der Anmeldung: 24.06.1998
(73) Patentinhaber: Benecke-Kaliko Aktiengesellschaft, D-30419 Hannover (DE)
(72) Erfinder: Bühring, Jürgen, Dr., 30853 Langenhagen (DE); Sluka, Albrecht, Dr., 73035 Göppingen (DE)
(74) Vertreter: Hagemann, Heinrich, Dr.rer.nat., Dipl.-Chem.

(56) Entgegenhaltungen:
- EP-A- 0 477 025
- EP-A- 0 688 821
- WO-A-93/24568
- WO-A-96/19535

## Beschreibung

Die Erfindung betrifft eine hochfrequenz-verschweißbare Polymermischung und Folien oder Formkörper mit einem Gehalt an dieser Polymermischung.

Es ist bekannt, daß Kunststoffteile im Hochfrequenzfeld verschweißt werden können. Hierbei werden zu verbindende Thermoplastteile in Form von Folien bzw. Formkörpern im Kondensatorfeld einer hochfrequenten Spannungsquelle ohne Zusatzwerkzeug auf die erforderliche Schweißtemperatur erhitzt. Die Folien werden dabei nahtartig verschweißt (scher- oder schälbeanspruchbare Überlappnähte). Hochfrequenz-verschweißbar sind vor allem Thermoplaste mit polarem Aufbau, d.h. Kunststoffe, in denen Moleküle, Atome oder Seitengruppen eingebaut sind, die eine Ladungsverschiebung im Molekül (Dipole) bewirken. Kommt ein derartiger Thermoplast in ein hochfrequentes Wechselfeld, so führen die polaren Gruppierungen entsprechend der Anregungsfrequenz Schwingungen aus. Die Schwingungen führen zur Wärmeentwicklung im Kunststoff. Als Kenngröße für die Umwandlung elektrischer Feldenergie in Wärme wird im allgemeinen der dielektrische Verlustfaktor tan δ verwendet. In der Regel werden die Folien nicht ganzflächig verbunden. Die Schweißung beschränkt sich im allgemeinen auf linien- bzw. rahmenförmige Konturen und die Erwärmung auf den jeweiligen Schweißstegbereich.

Polyolefine können aufgrund ihres unpolaren Charakters jedoch nicht auf diese Weise verarbeitet werden. Um auch Polyolefine im Hochfrequenzfeld verschweißen zu können, schlägt die US 3 336 173 die Zumischung von Polyamiden zu Polyolefinen vor. Formteile aus solchen Materialien besitzen allerdings den Nachteil, daß die erhaltenen Schweißnähte nicht ausreichend fest sind bzw. neben der Schweißnaht reißen.

Die EP-A-0 406 568 beschreibt eine Polypropylen-Polyamid-Formmasse, die neben einem Polypropylen-homo- und/oder -copolymerisat und einem Polyamid eine olefinisch ungesät-tigte Carbonsäure und/oder ein olefinisch ungesättigtes Carbonsäurederivat enthält. Die EP-A-0 406 568 enthält keine Aussagen zur Hochfrequenzverschweißbarkeit der beschriebenen Formmasse.

Die DE-A-41 42 271 beschreibt Formteile, die im wesentlichen Polyolefine, Polyamide und Haftvermittler enthalten. Als Haftvermittler ist ein mit Maleinsäureanhydrid gepfropftes Copolymer aus Styrol- und Ethylenbutylen-Blöcken bevorzugt.

Die EP 0 688 821 A2 bezieht sich auf Polyolefinzusammensetzungen, umfassend (I) 85 bis 97% eines heterophasischen Olefinpolymers, gegebenenfalls modifiziert mit polaren Monomeren in Mengen von 0,3 bis 0,03% des heterophasischen Olefinpolymers, und (II) 3 bis 15% mindestens eines Polyolefins mit einem dielektrischen Wärmeverlustfaktor über oder gleich 0,01, welches beispielsweise ein Polyamid darstellen kann.

Ferner bezieht sich die Lehre der WO 93/24568 auf Hochfrequenz-verschweißbare Polymerartikel, hergestellt durch Vermischen einer Polymerzusammensetzung, umfassend mindestens ein Ethylen-Vinylacetat-Copolymer, ein Propylenhomopolymer oder ein Propylen-Ethylen-Copolymer sowie ein Vernetzungsmittel und ein oder mehrere weitere Polymere, wobei beispielsweise ein Polyetheramid-Blockcopolymer vorhanden sein kann, und Formen der Polymerzusammensetzung zu einem Gegenstand.

Die bekannten Polyolefin-Polyamid-Massen weisen den Nachteil auf, daß sie bei Raumtemperatur einen geringen dielektrischen Verlustfaktor aufweisen, was dazu führt, daß sie im Hochfrequenz-Wechselfeld nur geringe Mengen an Energie aufnehmen können. Es ist daher ein nachteilig hoher Energieeintrag und eine hohe Schweißleistung zum Verschweißen dieses Materials erforderlich. Andererseits steigt mit zunehmender Materialerwärmung durch die Aufnahme von Energie im Hochfrequenz-Feld der dielektrische Verlustfaktor stark an, was zu einer signifikanten Abnahme der Durchschlagsspannung bzw. -festigkeit führt und die Gefahr von Durchschlägen erhöht. Dies hat einen steigenden Ausschußanteil zur Folge.

Ferner ist bekannt, daß Copolymere aus Ethylen und Vinylacetat hochfrequenzverschweißbar sind. Aus beispielsweise der JP-A-06287362 geht eine hochfrequenz-verschweißbare Mischung von Polyolefin mit Ethylen-Vinylacetat-Copolymer (EVA) hervor. Allerdings weisen Formkörper derartiger Mischungen nur eine geringe Wärmeformstabilität auf. Folien aus derartigen Mischungen mit hohem EVA-Gehalt neigen bei erhöhter Temperatur zum Verkleben.

Der Erfindung lag daher die Aufgabe zugrunde, eine Polymermischung zu schaffen, die bei geringer Temperaturabhängigkeit des dielektrischen Verlustfaktors eine ausreichende HF-Verschweißbarkeit und gute Schweißnahtfestigkeit sowie hohe Wärmestabilität aufweist.

Erfindungsgemäß wird diese Aufgabe durch eine hochfrequenz-verschweißbare Polymermischung gelöst, die die folgenden Komponenten a) und b) enthält:
**a)** 1 bis 80 Gew.-% Copolymer von Ethylen mit 8 bis 45 Gew.-% Comonomeren, ausgewählt aus Vinylestern gesättigter C₂-C₈-Carbonsäuren, C₁-C₁₂-Alkylacrylaten und -methacrylaten, wahlweise mit Kohlenmonoxid als Termonomer, wobei das Copolymer einen Schmelzindex MFI (190°C; 2,16 kg) von 0,2 bis 7,0 g/10 min aufweist,
**b)** 20 bis 99 Gew.-% polyamidhaltiges thermoplastisches Polyolefin mit einem Schmelzindex MFI (230°C; 2,16 kg) von 0,5 bis 7,0 g/10 min, welches enthält:
   aa) 3 bis 50 Gew.-% Polyamid mit einem Schmelzpunkt von mehr als 200°C;
   bb) 50 bis 97 Gew.-% Polyolefin, welches Polyolefin (i) ein Propylencopolymer ist, welches zu 10 bis 95 Gew.-% aus einem oder mehreren Polypropylenblökken und zu 90 bis 5 Gew.-% aus einem oder mehreren statistischen Copolymerblöcken aus Ethylen, C₃-C₁₂-α-Olefin und wahlweise Dien besteht, wobei der Ethylengehalt in den statistischen Copolymerblöcken 50 bis 95 Gew.-% beträgt, oder (ii) ein Gemisch eines Polypropylens und eines Copolymers von Ethylen, C₃-C₁₂-α-Olefin und wahlweise Dien ist, wobei das Gewichtsverhältnis von Polypropylen zu Copolymer 9:1 bis 1:9 beträgt, oder (iii) ein Gemisch von (i) und (ii) ist, wobei das Ethylen-Copolymer einen Gelgehalt von weniger als 5 % aufweist;
   cc) 0 bis 40 Gew.-% Kompatibilitätsvermittler,
wobei sich die Menge an aa) bis cc) auf 100 Gew.-% ergänzen und auf die Komponente b) bezogen sind und die Mengen an a) und b) auf die Summe von a) + b) bezogen sind.

Vorzugsweise enthält die Mischung 15 bis 70 Gew.-% Komponente a) und 30 bis 85 Gew.-% Komponente b).

In einer bevorzugten Ausführungsform enthält die erfindungsgemäße Polymermischung zusätzlich bis 20 Gew.-%, auf 100 Gew.-% der Komponenten a) + b), eines teilvernetzten thermoplastischen Elastomers (TPE) mit einem gelgehalt von 10 bis 70% und einem Schmelzindex MFI (230°C; 10 kg) von 5 bis 30 g/10 min.

In einer weiteren bevorzugten Ausführungsform enthält die erfindungsgemäße Polymermischung zusätzlich bis 20 Gew.-%, auf 100 Gew.-% der Komponenten a) + b), eines Copolymers von Ethylen mit 12 bis 30 Gew.-% C₃-C₁₂-α-Olefin mit einem Schmelzindex MFI (190°C; 2,16 kg) von 0,2 bis 7,0 g/10 min.

In einer weiteren bevorzugten Ausführungsform enthält die erfindungsgemäße Polymermischung zusätzlich bis 20 Gew.-%, auf 100 Gew.-% der Komponenten a) + b) eines Polyethylens mit einer Dichte von 0,933 bis 0,966 g/cm³ und einem Schmelzindex MFI (190°C; 2,16 kg) von 0,2 bis 5,0 g/10 min.

Die erfindungsgemäße Polymermischung enthält als Komponente a) ein Copolymer von Ethylen mit einem polaren Comonomer. Der Gehalt an polaren Monomereinheiten liegt zwischen 8 und 45 Gew.-%, insbesondere zwischen 14 und 35 Gew.-%. Der MFI-Wert (190 °C; 2,16 kg) liegt zwischen 0,2 und 7,0 g/10 min, vorzugsweise zwischen 0,3 und 4,0 g/10 min. Als polare Comonomere können Vinylester einer gesättigten Carbonsäure mit 2 bis 8 Kohlenstoffatomen und/oder Alkylacrylate oder -methacrylate mit 1 bis 12 C-Atomen in der Alkylgruppe Verwendung finden. Bevorzugte Beispiele sind Ethylen-Vinylacetat-Copolymer, Ethylen-Methylacrylat-Copolymer, Ethylen-Ethylacrylat-Copolymer und/oder Ethylen-Butylacrylat-Copolymer. Außerdem können (Ter)Polymere eingesetzt werden, die aus Ethylen, einem oder mehreren der genannten Comonomeren und Kohlenmonoxid bestehen, wobei die einzelnen Monomereinheiten statistisch über die Polymerkette verteilt sind. Ein bevorzugtes Beispiel ist Ethylen-Vinylacetat-Kohlenmonoxid-Terpolymer. Es können auch Gemische der genannten Co-ₓ Ter oder polymerisate eingesetzt werden.

Die Komponente b) der erfindungsgemäßen Polymermischung besteht aus einem Polyamidanteil und einem Polyolefinanteil. Das eingesetzte Polyamid kann ein amorphes oder teilkristallines Polyamid sein, wobei teilkristalline Polyamide aufgrund ihrer Wärmeform-beständigkeit bevorzugt sind. Vorzugsweise weist das Polyamid ein Molekulargewicht von mindestens etwa 5000 auf. Die Polyamide können durch Polykondensation von äquimolaren Mengen an gesättigten Dicarbonsäuren mit 4 bis 12 C-Atomen, vorzugsweise 6 bis 12 C-Atomen, pro Molekül mit einem Diamin, das 4 bis 12 C-Atome pro Molekül enthält, hergestellt werden. Geeignete Polyamide können auch durch ringöffnende Polymerisation von Lactamen hergestellt werden. Beispiele geeigneter Polyamide sind u.a. Polyhexamethylenadipinsäureamid (Nylon 6,6), Polyhexamethylensebacinsäureamid (Nylon 6,10), Polyhexamethylendodecandicarbonsäureamid (Nylon 6,12), Poly-ε-caprolactam (Nylon 6) oder Polylaurinsäurelactam.

Weiterhin können- auch Polyamide verwendet werden, die durch Copolykondensation von mindestens zwei der genannten Polymere oder ihrer Aufbaukomponenten hergestellt worden sind. Vorzugsweise sind die Polyamide linear. Diese weisen einen Schmelzpunkt von mehr als 200°C auf. Der Polyamidgehalt, bezogen auf die Komponente b), beträgt 3 bis 50 Gew.-%, vorzugsweise 5 bis 35 Gew.-%.

Der polyolefinische Anteil von Komponente b) ist in einer Ausführungsform ein Propylencopolymer, welches seinerseits zu 10 bis 95 Gew.-%, vorzugsweise 30 bis 70 Gew.-%, aus einem oder mehreren Polypropylenblöcken und zu 90 bis 5 Gew.-%, vorzugsweise 70 bis 30 Gew.-%, aus einem oder mehreren statistischen Copolymerblöckcn aus Ethylen, C₃-C₁₂-α-Olefin und wahlweise Dien besteht, wobei der Ethylengehalt in den statistischen Copolymerblöcken 50 bis 95 Gew.-%, vorzugsweise 50 bis 85 Gew.-%, beträgt. Die Polypropylenblöcke sind entweder Propylenhomopolymerblöcke oder Propylencopolymerblöcke mit überwiegenden Propylenanteil, die neben Propylen weniger als etwa 30 Gew.-%, vorzugsweise weniger als etwa 20 Gew.-%, insbesondere weniger als etwa 10 Gew.-% und besonders bevorzugt weniger als etwa 5 Gew.-%, Ethylen oder C₄-C₈-α-Olefin enthalten können. Der Schmelzpunkt des Polypropylenblocks sollte vorzugsweise über etwa 130° C, insbesondere über etwa 140° C, liegen. Der Schmelzpunkt des Polypropylenblocks im Propylencopolymer kann durch DSC (Differential-Scanning-Calorimetry) bestimmt werden. Bei dem Propylencopolymer kann es sich einerseits um ein segmentiertes Blockcopolymer handeln, bei dem z.B. ein Polypropylenblock auf mindestens einer Seite von einem statistischen Copolymerblock flankiert wird oder ein statistischer Copolymerblock beidseitig von Polypropylenblöcken flankiert wird. Geeignet sind andererseits aber auch Pfropfcopolymere, bei denen das statistische Copolymer auf ein Polypropylenge-rüst gepfropft ist, sowie Mischformen von Blockund Pfropfcopolymere. Die genannten Propylencopolymere zeigen eine Kombination unterschiedlicher mechanischer Eigenschaften, insbesondere einer hohen Schlagzähigkeit bei noch ausreichend hoher Steifigkeit. Diese sind im allgemeinen durch Verfahren erhältlich, bei denen in einer ersten Reaktionsstufe zunächst Propylen (oder ein α-Olefingemisch mit überwiegendem Propylenanteil) polymerisiert wird und das daraus resultierende (Homo)-Polymerisat anschließend in eine zweite Reaktionsstufe gebracht wird, wo diesem ein Gemisch aus Ethylen, C₃-C₁₂-α-Olefin hinzupolymerisiert wird. Die erste Reaktionsstufe kann im allgemeinen nach dem Ziegler-Natta-Verfahren mit gasförmigen Propylen, oder aber durch Polymerisation von Propylen in flüssiger Phase in Gegenwart eines Festphasenkatalysators durchgeführt werden. Die zweite Reaktionsstufe kann ebenfalls eine Ziegler-Natta-Polymerisation darstellen, kann sich jedoch auch einer anionischen Polymerisation oder eines anderen Mechanismus bedienen. Geeignete Verfahren sind z.B. in den EP-A-0 131 322 und GB-A-2 157 302 offenbart.

Alternativ setzt sich der polyolefinische Anteil von Komponente b) aus mindestens einem teilkristallinen Propylen und mindestens einem als Schlagzäh-Komponente wirkenden Ethylencopolymer zusammen. Das Gewichtsverhältnis von Polypropylen zu Copolymer beträgt hierbei 9:1 bis 1:9, vorzugsweise 7:3 bis 3:7. Das Polypropylen ist ein Propylenhomopolymer oder ein Propylencopolymer, das neben Propylen weniger als etwa 30 Gew.-%, vorzugsweise weniger als etwa 20 Gew.-%, insbesondere weniger als 10 Gew.-% und besonders bevorzugt weniger als etwa 5 Gew.-% Ethylen oder C₄-C₈-α-Olefin enthalten. Der Schmelzpunkt des Polypropylens liegt vorzugsweise über etwa 130°C, insbesondere über etwa 140 °C. Das Polypropylen ist vorzugsweise isotaktisches Polypropylen oder weist isotaktische Sequenzen auf. Das als Schlagzäh-Komponente wirkende Ethylencopolymer enthält Ethylen, ein C₃-C₁₂-α-Olefin und wahlweise Dien. Der Ethylengehalt beträgt vorzugsweise 50 bis 95 Gew.-%, insbesondere 50 bis 85 Gew.-%. Als α-Olefin findet bei der Herstellung dieser Copolymere normalerweise Propylen Verwendung, jedoch können auch 1-Buten, 1-Penten, 1-Hexen und 4-Methyl-penten-1 in teilweisem Ersatz oder zusätzlich zum Propylen bei der Herstellung geeigneter schlagzähwirkender Ethylencopolymere eingesetzt werden. Das schlagzähwirkende Ethylencopolymer weist einen niedrigen Gelgehalt auf. Der Gelgehalt kann durch Extraktion in siedendem Xylol bestimmt werden. Ein niedriger Gelgehalt weist auf eine geringe Vernetzungsdichte hin und ist für ein Polymer mit vorteilhaften Verarbeitungseigenschaften kennzeichnend. Der Gelgehalt beträgt weniger als 5 Gew.-%. Das schlagzähwirkende Ethylencopolymer ist vorzugsweise weitgehend amorph. Ein bevorzugtes Beispiel ist EPM-Kautschuk.

Als Schlagzäh-Komponente sind auch Copolymere von Ethylen, mindestens einen C₃-C₆-α-Olefin und mindestens einem nichtkonjugierten Dien verwendbar. Hiervon ist EPDM bevorzugt. Eine besonders bevorzugte Klasse von EPDM enthält ein monoreaktives nichtkonjugiertes Dien. Monoreaktive nichtkonjugierte Diene weisen eine Doppelbindung auf, die bereitwillig an der Copolymerisierungsreaktion mit Ethylen und Propylen teilnimmt, und eine zweite Doppelbindung, die an der Copolymerisierungsreaktion nicht nennenswert teilnimmt. Copolymere dieser Klasse weisen eine maximale Seitenkettenunsättigung bei einem gegebenen Diengehalt auf, die für eine Adduktbildung zur Verfügung steht. Der Gelgehalt dieser Copolymere ist auch niedrig, da während der Copolymerisation minimale Vernetzung stattfindet.

Geeignete Diene sind lineare aliphatische nichtkonjugierte Diene, z.B. 1,4-Hexadien, Alkylidenbicycloalkene, z.B. 5-Ethyliden-2-norbornen, Alkenylbicycloalkene, z.B. 5-Alkenyl-2-norbornene, Bicycloalkadiene, z.B. Bicyclopentadien, und Alkenylcycloalkene, z.B. Vinylcyclohexen. Eine weitere Klasse bevorzugter schlagzähwirkender Ethylencopolymere sind verzweigte Tetrapolymere aus Ethylen, mindestens einem C₃-C₆-α-Monoolefin (vorzugsweise Propylen), mindestens einem monoreaktiven nichtkonjugierten Dien und mindestens einem direaktiven nichtkonjugierten Dien, z.B. 2,5-Norbornadien oder 1,6-Octadien. "Direaktiv" bedeutet, daß beide Doppelbindungen während der Herstellung des Polymers zur Polymerisation fähig sind. Als Schlagzäh-Komponente sind auch Mischungen der vorstehend beschriebenen Ethylencopolymere geeignet.

Die polyolefinischen Anteile von b), d.h. das Propylencopolymer bzw. das Polypropylen und/oder das schlagzähwirkende Ethylencopolymer können wahlweise mit polaren Gruppen modifiziert sein, wobei die polaren Gruppen insbesondere saure Verbindungen oder Derivate von sauren Verbindungen sein können. Diese polaren Gruppen machen vorzugsweise weniger als etwa 5, insbesondere weniger als etwa 3 Gew.-%, des modifizierten Polyolefins aus. Durch die eingebrachten funktionellen Gruppen wird eine verbesserte Verträglichmachung zwischen der unpolaren Polyolefin- und der Polyamidphase erreicht. Die verbesserte Verträglichkeit resultiert aus Wechselwirkungen der polaren Gruppen mit dem Polyamid, wobei die Wechselwirkungen chemische Reaktion, Wasserstoffbrücken- und Dipol-Dipol-Wechselwirkungen umfassen können. Die modifizierten Polyolefine können z.B. ungesättigte Mono- oder Dicarbonsäuren oder deren Derivate in einpolymerisierter oder aufgepfropfter Form enthalten. Die modifizierenden Comonomere können hierzu bereits bei der Herstellung der Polyolefine durch Polymerisation von Olefinen zugegen sein und auf diese Weise in die wachsende Polymerkette eingebaut werden. Die nachträgliche Modifizierung der Polyolefine gelingt z.B. durch deren Umsetzung mit einer ungesättigten Mono-/ oder Polycarbonsäure oder deren Derivat in Gegenwart einer Radikalquelle. Die oben dargestellte EPDM-Klasse kann aufgrund der Seitenkettenunsättigung besonders leicht modifiziert werden. Als ungesättigte Mono- oder Polycarbonsäuren oder deren Derivate sind Acrylsäure, Methacrylsäure, Maleinsäure, Maleinanhydrid und Fumarsäure bevorzugt.

Da unmodifizierte Polyolefine und Polyamide im allgemeinen unverträglich sind, so daß einfache Gemische kein technisch brauchbares Eigenschaftsniveau besitzen, kann die Komponente b) bis zu 40 Gew.-% eines Kompatibilitätsvermittlers enthalten. Als Kompatibilitätsvermittler dienen beispielsweise mit ungesättigten Carbonsäuren oder Carbonsäurederivaten modifizierte Polyolefine, soweit sie nicht unter die oben dargestellten Verbindungsklassen unter bb) fallen. Hierzu sei auf die EP-A-0 406 568 und EP-A-0 188 123 verwiesen. Geeignet sind auch Styrol- und Ethylenbutylen-Blöcke enthaltende, vorzugsweise mit Maleinsäureanhydrid gepfropfte Copolymere, insbesondere selektiv hydrierte Styrol-Butadien-Styrol-Blockcopolymere, wie in der EP-A-0 261 748 beschrieben.

Die Komponente b) weist einen MFI-Wert (230 °C; 2,16 kg) von 0,5 bis 7,0 g/10 min, insbesondere 1,0 bis 4,0 g/10 min, auf.

In einer bevorzugten Ausführungsform enthält die erfindungsgemäße Polymermischung als zusätzlichen polymeren Bestandteil bis zu 20 Gew.-%, insbesondere 2 bis 15 Gew.-%, auf 100 Gew.-% der Komponenten a) + b), eines teilvernetzten thermoplastischen Elastomers (TPE). Dessen MFI (230°C; 10 kg) beträgt 5 bis 30 g/10 min. Hierzu sind insbesondere teilvernetzte Elastomerlegierungen aus PP und EPDM geeignet. Der Gelgehalt beträgt 10 bis 70 %. Der Zusatz des teilvernetzten TPEs verbessert insbesondere die Wärmeformstabilität.

In einer weiteren bevorzugten Ausführungsform enthält die erfindungsgemäße Polymermischung zusätzlich bis zu 20 Gew.-%, insbesondere 2 bis 15 Gew.-%, auf 100 Gew.-% der Komponenten a) + b), eines Polyethylens sehr niedriger Dichte (VLDPE), d.h. eines Copolymers von Ethylen mit einem C₃-C₁₂-α-Olefin mit einem Comonomergehalt von 12 bis 30 Gew.-%. Als Comonomer ist 1-Octen bevorzugt. Die Dichte liegt im allgemeinen zwischen 0,860 und 0,905 g/cm³. Der Zusatz des niedrigdichten Polyethylens erhöht die Folienflexibilität und verbessert insbesondere die Schäldehnung. Gleichzeitig wird die Verschweißbarkeit erhöht, weil die erweichten Folienränder besser ineinanderfließen.

In einer weiteren bevorzugten Ausführungsform enthält die erfindungsgemäße Polymermischung zusätzlich bis 20 Gew.-%, auf 100 Gew.-% der Komponenten a) + b), eines Polyethylens hoher Dichte (HDPE) mit einer Dichte von 0,933 bis 0,968 g/cm³ und einem Schmelzindex MFI (190 °C, 2,16 kg) von 0,2 bis 5,0 g/10 min. Der Zusatz des Polyethylens hoher Dichte bewirkt eine verbesserte Wärmeformstabilität sowie günstige Schälspannung und Schälkraft bei hoher Schäldehnung.

Die Einhaltung der angegebenen MFI-Werte der Komponenten ist kritisch, weil beim Herstellungsprozeß die erweichten Massen eine ausreichende Festigkeit aufweisen müssen, um maschinengängig zu sein. Andererseits muß die Polymermischung beim Verschweißvorgang eine hinreichende Fließfähigkeit besitzen.

Die erfindungsgemäße Polymermischung kann außerdem Zusatzstoffe in einer Menge enthalten, in der die HF-Verschweißbarkeit nicht wesentlich beeinflußt wird. Als Beispiele für Füllstoffe sind Calciumcarbonat, Calciumsilikat, Talkum, Silika, Glimmer und Aluminiumoxid zu nennen. Die Füllstoffe können in einer Menge bis zu 30 Gew.-%, bezogen auf die Menge an polymeren Bestandteilen, eingesetzt werden. Es sind außerdem die Zugabe weiterer Additive, wie Antiblockmittel, Gleitmittel, Lichtschutzmittel, Antioxidantien, Farbstoffe, Pigmente, Flammschutzmittel oder Antistatika möglich. Die Additive werden üblicherweise in Gehalten bis zu 30 Gew.-%, bezogen auf die Menge an polymeren Komponenten, zugegeben.

Die erfindungsgemäße Polymermischung kann wie folgt hergestellt werden: Vorzugsweise werden die granulierten Rohstoffe kalt gemischt und einem Extruder, vorzugsweise einem Zweischneckenextruder, zugeführt und dort plastifiziert. Das Material wird über eine Breitschlitzdüse zu einer Bahnenware (Folie) ausgetragen und von Nachfolgeeinrichtungen aufgenommen. Formkörper sind durch beispielsweise Tiefziehen aus der Folie erhältlich.

Die erfindungsgemäße Polymermischung eignet sich insbesondere zur Herstellung einer Folie, insbesondere Weichfolie, oder Formkörpern nach üblichen Verfahren. Sie findet vorzugsweise im Automobilbereich Anwendung für Himmel, Kopfstützen, Halteschlaufen, Hut-ablagen, Sitz- und Rückpolsterbezügen und rückseitige Verkleidungen der Vordersitze, Sonnenblenden, Laderaumabdeckungen, Trittschutz oder Türseitenverkleidungen. Daneben sind Anwendungen bei der Kofferauskleidung, bei Bucheinbänden etc. möglich.

Die Erfindung wird nachfolgend durch Beispiele näher erläutert.

### Beispiele

In den Beispielen werden folgende Einsatzstoffe verwendet:
- EVA:: Ethylen-Vinylacetat-Copolymer, MFI=2,5 g/10 min (190°C, 2,16 kg); Vinylacetat-Gehalt: 28 Gew.-%;
- TPO/PA:: polyamidhaltiges TPO, MFI=3,0 g/10 min (230°C, 2,16 kg); Polymerblend aus etwa 15 Gew.-% Polyamid, etwa 8 Gew.% Phasenvermittler, etwa 67 Gew.-% Blockcopolymer (42 % PP / 58% E/P);
- TPE:: thermoplastisches Elastomer, PP/EPDM; MFI=15 g/10 min (230°C, 10 kg);
Gelgehalt etwa 30 %;
- VLDPE:: Ethylen-1-Octen-Copolymer, MFI=0,5 g/0 min (190°C, 2,16 kg); Octen-Gehalt: 25 Gew.-%;
- HDPE:: Polyethylen hoher Dichte, MFI=0,8 g/10 min (190°C, 5 kg); Dichte: 940 kg/m³

An den gemäß den folgenden Beispielen erhaltenen Folien wurden folgende Eigenschaften in Längs- und/oder Querrichtung gemessen:

| | |
|---|---|
| Bruchspannung [MPa] | DIN 53455 |
| Bruchdehnung [%] | DIN 53455 |
| Shorehärte D | DIN 53505 |

Die Festigkeit der Schweißnähte wurde durch die Messung der Schälkraft, der Schälspannung und der Schäldehnung (an 15 mm breiten miteinander verschweißten Probekörpern) in Anlehnung an DIN 53357 in Längsrichtung geprüft. Die Eigenschaftswerte werden in Tabelle 1 zusammengefaßt.

### Vergleichsbeispiel 1

In einem Trommelmischer werden 60 Gew.-Teile EVA, 20 Gew.-Teile TPE, 10 Gew.-Teile VLDPE und 10 Gew.-Teile HDPE gemischt und anschließend in einem Zweischneckenextruder bei 155 °C zu einer 0,7 mm starken Folie extrudiert.

Zwei Folien wurden auf einer Hochfrequenzschweißanlage mit einem Generator G 4000 SD und der Presse KH 500 jeweils von der Firma Kiefel bei Raumtemperatur verschweißt. Folgende Schweißparameter wurden gewählt:

| | |
|---|---|
| Schweißdruck | 1600 N |
| Schweißzeit | 4 sec |
| Schweißspannung | 2100 V |
| Elektrode | 300 x 5 mm |

Die physikalisch-mechanischen Eigenschaften der Schweißnähte sind in Tabelle 1 zusammengefaßt.

### Vergleichsbeispiel 2 und Beispiele 3-7:

Es wurden die in Tabelle 1 angegebenen Komponenten gemischt. Die Folienherstellung erfolgte analog Vergleichsbeispiel 1, außer daß die Extrudertemperatur auf 180°C angehoben wurde. Es wurden homogene Folien mit den in Tabelle 1 angegebenen mechanischen Eigenschaften, Schweißnahteigenschaften und dem angegebenen HF-Schweißverhalten erhalten.

Die Folie nach Vergleichsbeispiel 1 zeigt eine zu hohe Wärmedehnung. Es zeigt sich, daß der dielektrische Verlustfaktor der Folie nach Vergleichsbeispiel 2 stark temperaturabhängig ist. Die erfindungsgemäßen Folien hingegen vereinen zufriedenstellende physikalisch-me-chanische Eigenschaften von Folie und Schweißnähten mit hohem dielektrischen Verlustfaktor, der bei Temperaturänderung eine geringe relative Änderung aufweist.

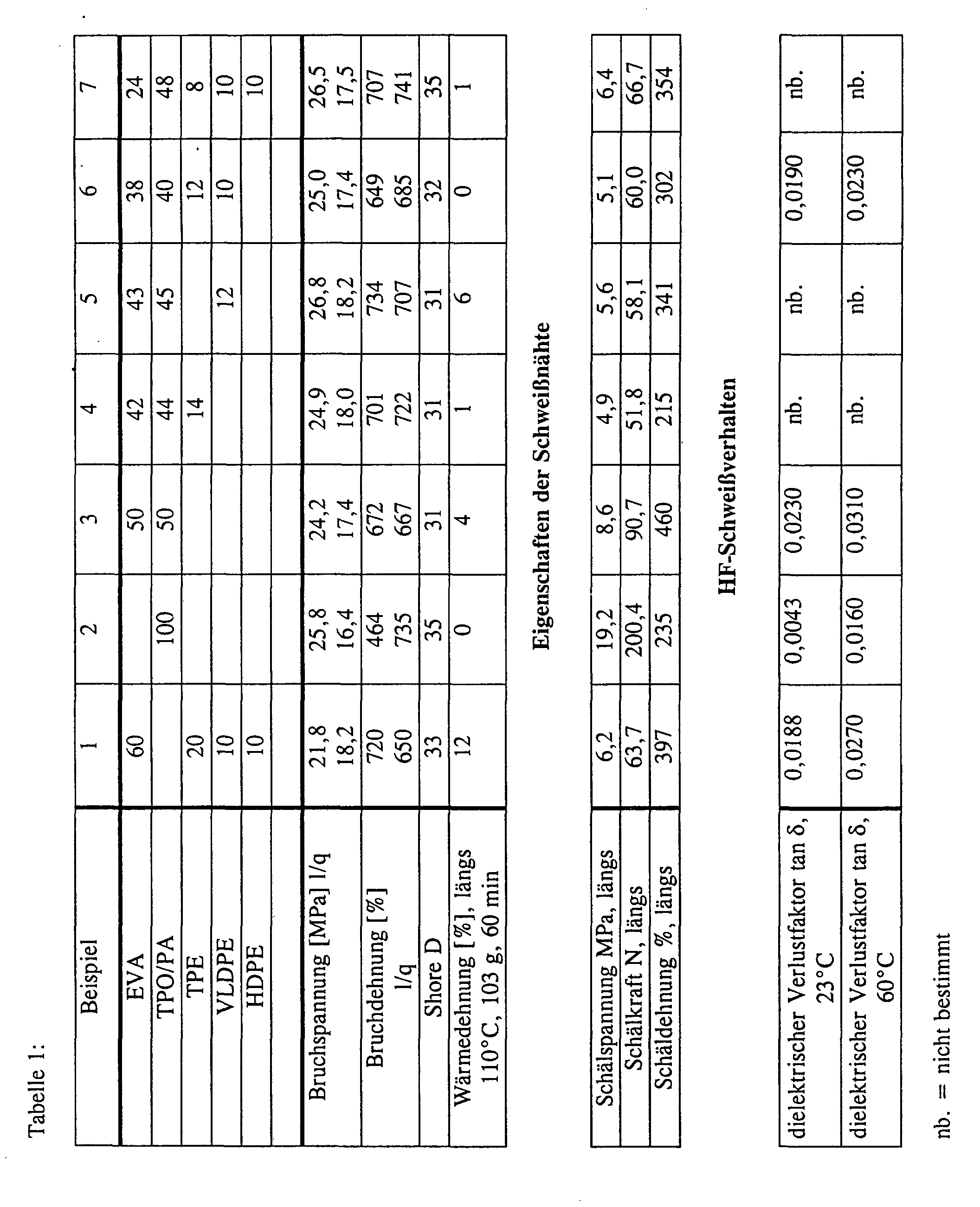

## Patentansprüche

1. Hochfrequenz-verschweißbare Polymermischung, enthaltend
**a)** 1 bis 80 Gew.-% Copolymer von Ethylen mit 8 bis 45 Gew.-% Comonomeren, ausgewählt aus Vinylestern gesättigter C₂-C₈-Carbonsäuren, C₁-C₁₂-Alkylacrylaten und -methacrylaten, wahlweise mit Kohlenmonoxid als Termonomer, wobei das Copolymer einen Schmelzindex MFI (190°C; 2,16 kg) von 0,2 bis 7,0 g/10 min aufweist,
**b)** 20 bis 99 Gew.-% polyamidhaltiges thermoplastisches Polyolefin mit einem Schmelzindex MFI (230°C; 2,16 kg) von 0,5 bis 7,0 g/10 min, welches enthält:
aa) 3 bis 50 Gew.-% Polyamid mit einem Schmelzpunkt von mehr als 200°C;
bb) 50 bis 97 Gew.-% Polyolefin, welches Polyolefin (i) ein Propylencopolymer ist, welches zu 10 bis 95 Gew.-% aus einem oder mehreren Polypropylenblöcken und zu 90 bis 5 Gew.-% aus einem oder mehreren statistischen Copolymerblöcken aus Ethylen, C₃-C₁₂-α-Olefin und wahlweise Dien besteht, wobei der Ethylengehalt in den statistischen Copolymerblöcken 50 bis 95 Gew.-% beträgt, oder (ii) ein Gemisch eines Polypropylens und eines Copolymers von Ethylen, C₃-C₁₂-α-Olefin und wahlweise Dien ist, wobei das Gewichtsverhältnis von Polypropylen zu Copolymer 9:1 bis 1:9 beträgt, oder (iii) ein Gemisch von (i) und (ii) ist, wobei das Ethylen-Copolymer einen Gelgehalt von weniger als 5 % aufweist;
cc) 0 bis 40 Gew.-% Kompatibilitätsvermittler,
wobei sich die Menge an aa) bis cc) auf 100 Gew.-% ergänzen und auf die Komponente b) bezogen sind und die Mengen an a) und b) auf die Summe von a) + b) bezogen sind.

2. Polymermischung nach Anspruch 1, **gekennzeichnet durch** einen zusätzlichen Gehalt von bis zu 20 Gew.-%, auf 100 Gew.-% der Komponenten a) + b), eines teilvernetzten thermoplastischen Elastomers (TPE) mit einem Gelgehalt von 10 bis 70 % und einem Schmelzindex MFI (230°C; 10 kg) von 5 bis 30 g/10 min.

3. Polymermischung nach einem der Ansprüche 1 oder 2, **gekennzeichnet durch** einen zusätzlichen Gehalt von bis zu 20 Gew.-%, auf 100 Gew.-% der Komponenten a) + b) eines Polyethylens mit einer Dichte von 0,933 bis 0,966 g/cm³ und einem Schmelzindex MFI (190°C; 2,16 kg) von 0,2 bis 5,0 g/10 min.

4. Folie oder Formkörper mit einem Gehalt an der Polymermischung nach einem der Ansprüche 1 bis 3.

## Claims

1. High frequency-weldable polymer mixture including
a) 1 to 80 % by wt. copolymer of ethylene with 8 to 45 % by wt. comonomers, selected from vinyl esters of saturated C₂-C₈-carbonic acids, C₁-C₁₂-alkyl acrylates and -methacrylates, optionally with carbon monoxide as a termonomer, the copolymer having a melt flow index MFI (190°C; 2.16 kg) of 0.2 to 7.0 g/10 min,
b) 20 to 99 % by wt. polyamide-containing thermoplastic polyolefin with a melt flow index MFI (230°C; 2.16 kg) of 0.5 to 7.0 g/10 min, which contains:
aa) 3 to 50 % by wt. polyamide with a melting point of more than 200°C;
bb) 50 to 97 % by wt. polyolefin, which polyolefin (i) is a propylene copolymer, 10 to 95 % by wt. of which comprises one or more polypropylene blocks and 90 to 5 % by wt. of which comprises one or more statistical copolymer blocks of ethylene, C₃-C₁₂-α-olefin and optionally diene, the ethylene content in the statistical copolymer blocks being 50 to 95 % by wt., or (ii) is a mixture of a polypropylene and a copolymer of ethylene, C₃-C₁₂-α-olefin and optionally diene, the weight ratio of polypropylene to copolymer being 9:1 to 1:9, or (iii) is a mixture of (i) and (ii), the ethylene copolymer having a gel content of less than 5%;
cc) 0 to 40 % by wt. compatibility promoters,
the amounts of aa) to cc) making up 100 % by wt. and being referred to the components b) and the amounts of a) and b) being referred to the sum of a) + b).

2. Polymer mixture as claimed in Claim 1, **characterised by** an additional content of up to 20 % by wt. to 100 % by wt. of the components a) + b) of a partially cross-linked thermoplastic elastomer (TPE) with a gel content of 10 to 70% and a melt flow index MFI (230°C; 10 kg) of 5 to 30 g/10 min.

3. Polymer mixture as claimed in one of Claims 1 to 2, **characterised by** an additional content of up to 20 % by wt. to 100 % by wt. of the components a) + b) of a polyethylene with a density of 0.933 to 0.966 g/cm³ and a melt flow index MFI (190°C: 2.16 kg) of 0.2 to 5.0 g/10 min.

4. Film or moulded body with a content of the polymer mixture as claimed in one of Claims 1 to 3.

## Revendications

1. Mélange polymère soudable par haute fréquence, contenant :
a) 1 à 80% en poids d'un copolymère d'éthylène et de 8 à 45% en poids de comonomères, choisis parmi des esters vinyliques d'acides carboxyliques saturés en C₂ à C₈, des acrylates et des méthacrylates d'alkyle en C₁ à C₁₂, avec facultativement du monoxyde de carbone comme termonomère, le copolymère ayant un indice de fusion MFI (190°C ; 2,16 kg) de 0,2 à 7,0 g/10 min,
b) 20 à 99% en poids de polyoléfine thermoplastique contenant un polyamide, ayant un indice de fusion MFI (230°C ; 2,16 kg) de 0,5 à 7,0 g/10 min, qui contient :
aa) 3 à 50% en poids de polyamide ayant un point de fusion supérieur à 200°C ;
bb) 50 à 97% en poids d'une polyoléfine, qui (i) est un copolymère de propylène constitué de 10 à 95% en poids d'une ou plusieurs séquences polypropyléniques et de 90 à 5% en poids d'une ou plusieurs séquences copolymères statistiques d'éthylène, d'α-oléfine en C₃ à C₁₂ et facultativement d'un diène, la teneur en éthylène des séquences copolymères statistiques s'élevant à une valeur de 50 à 95% en poids ou (ii) est un mélange d'un polypropylène et d'un copolymère d'éthylène, d'une α-oléfine en C₂ à C₁₂ et facultativement d'un diène, le rapport en poids du polypropylène au copolymère s'élevant à une valeur de 9:1 à 1:9, ou (iii) est un mélange de (i) et (ii), le copolymère d'éthylène présentant une teneur en gel inférieure à 5% ;
cc) 0 à 40% en poids d'un agent compatibilisant ;
les quantités de aa) à ce) se complétant à 100% en poids et étant rapportées au composant b) et les quantités de a) et b) étant rapportées à la somme de a) + b).

2. Mélange polymère suivant la revendication 1, **caractérisé par** une teneur supplémentaire allant jusqu'à 20% en poids, par rapport à 100% en poids des composants a) + b), d'un élastomère thermoplastique partiellement réticulé (TPE) ayant une teneur en gel de 10 à 70% et un indice de fusion MFI (230°C ; 10 kg) de 5 à 30 g/10 min.

3. Mélange polymère suivant la revendication 1 ou 2, **caractérisé par** une teneur supplémentaire allant jusqu'à 20% en poids, par rapport à 100% en poids des composants a) et b), d'un polyéthylène ayant une masse volumique de 0,933 à 0,966 g/cm³ et un indice de fusion MFI (190°C ; 2,16 kg) de 0,2 à 5,0 g/10 min.

4. Feuille ou corps façonné ayant une teneur en mélange polymère suivant l'une des revendications 1 à 3.
